# EUROPÄISCHE PATENTSCHRIFT

(11) **EP 1 606 539 B1**
(45) Veröffentlichungstag und Bekanntmachung des Hinweises auf die Patenterteilung: **09.05.2007**
(21) Anmeldenummer: 03816234.3
(22) Anmeldetag: 16.12.2003
(51) Int. Cl.: F16K 1/22, F02D 9/10, F16K 1/226

(54) **TEILEINHEIT EINES DROSSELKLAPPENSTUTZENS**
DIVIDING UNIT OF A THROTTLE VALVE HOUSING
ELEMENT D'UN RACCORD DE CLAPET D'ETRANGLEMENT

(30) Priorität: 10.03.2003 DE 10310744
(43) Veröffentlichungstag der Anmeldung: 21.12.2005
(73) Patentinhaber: SIEMENS AKTIENGESELLSCHAFT, 80333 München (DE)
(72) Erfinder: HANNEWALD, Thomas, 64347 Griesheim (DE); KÖHLER, Stefan, 60437 Frankfurt/Main (DE); LINDNER, Roland, 65835 Liederbach (DE)
(86) Internationale Anmeldenummer: PCT/DE2003/004153
(87) Internationale Veröffentlichungsnummer: WO 2004/081429

(56) Entgegenhaltungen:
- FR-A- 2 687 601
- US-A- 3 260 502
- US-A- 4 899 984
- US-A1- 2003 034 474

## Beschreibung

Die Erfindung bezieht sich auf eine Teileinheit eines Drosselklappenstutzens. Drosselklappenstutzen sind bekannt. In der DE 195 12 874 A1 und auch der FR 2 687 601 A1 wird ein Drosselklappenstutzen beschrieben, der in einem rohrartigen Gehäuse angeordnet ist. Die Drosselklappe ist dabei auf einer Drosselklappenwelle befestigt, die quer zur Längsachse des rohrartigen Gehäuses an ihren freien Enden durch Ausnehmungen in der Gehäusewand hindurchführend und in Lagern drehbar gelagert ist. Im geschlossenen Zustand trennt die Drosselklappe das Gehäuse in eine Saugseite und in eine Seite, in der Umgebungsdruck herrscht. Bei diesem bekannten Drosselklappenstutzen ist nachteilig, dass durch den in der Saugseite anliegenden Unterdruck Leckluft über die Lager der Drosselklappenwelle in die Saugseite gelangen kann, was nicht erwünscht ist.

Die US 2003/0034474 A1 beschreibt eine Drosselklappe, die geneigt zur Drosselklappenwelle angeordnet ist. Zusätzliche Maßnahmen zur Abdichtung zwischen dem umlaufenden Rand der Drosselklappe und dem Drosselklappenstutzen sind nicht beschrieben. Die US 3,260,502, US 4,899,984 und US 3,586,920 beschreiben Drosselklappen aus Metall, bei denen umlaufende Dichtelemente vorgesehen sind. Um diese Dichtelemente gegen die Innenseite des Drosselklappenstutzens abzudichten, sind zusätzliche elastische Elemente vorgesehen, die den Dichtring gegen den Drosselklappenstutzen einerseits und gegen die Drosselklappe andererseits anpressen.

Der Erfindung liegt daher die Aufgabe zugrunde, eine Teileinheit für einen Drosselklappenstutzen zu schaffen, durch die das Einströmen von Leckluft über die Lager der Drosselklappenwelle zur Saugseite des Luftkanals weitgehend vermieden wird.

Die der Erfindung zugrundeliegende Aufgabe wird durch eine Teileinheit eines Drosselklappenstutzens mit den Merkmalen des Anspruchs 1 gelöst.

Die Teileinheit besteht aus Einzelteilen, die zusammengefügt sind. Die Drosselklappenwelle besteht dabei in der Regel aus Stahl. Die Drosselklappe ist beispielsweise kreisrund oder oval und im Wesentlichen scheibenförmig gestaltet und besteht beispielsweise aus Polyphenylensulfid. Die Drosselklappenwelle ist mittig durch die Drosselklappe hindurchführend angeordnet, worunter zu verstehen ist, dass die Drosselklappenwelle nicht seitenversetzt zum Durchmesser der Drosselklappe, sondern deren Längsachse durchlaufend durch die Drosselklappe geführt wird. Die Drosselklappe selbst kann dabei direkt an die Drosselklappenwelle gespritzt oder auf andere Weise befestigt werden. Unter dem maximalen spitzen Winkel α ist der Neigungswinkel der Drosselklappe bezogen auf die Längsachse der Drosselklappenwelle zu verstehen. Im geschlossenen Zustand liegt die äußere Kante der Drosselklappe bündig an der Innenwand des Luftkanals nahezu luftdicht an. Es hat sich in überraschender Weise gezeigt, dass durch die Teileinheit eines Drosselklappenstutzens ein Abschluss der Saugseite des Luftkanals in der Weise erreicht werden kann, so dass keine Leckluft über die Lager, in welchen die Drosselklappenwelle drehbar gelagert ist, hindurch zur Saugseite des Luftkanals gelangen kann. Durch die Anordnung der Drosselklappe im maximalen spitzen Winkel α zwischen der Längsachse der Drosselklappenwelle und einer weiteren Längsachse der Drosselklappe wird sichergestellt, dass das erste Lager für die Drosselklappenwelle der einen Seite, in der Umgebungsdruck herrscht, zuzuordnen ist, während das zweite Lager für die Drosselklappenwelle der Saugseite des Luftkanals zuzuordnen ist. Dieses zweite Lager ist jedoch durch die schräge Anordnung der Drosselklappe von der Seite des Luftkanals, in der Umgebungsdruck herrscht, hermetisch so abgeriegelt, dass ein Durchtritt von Leckluft nicht möglich ist.

Weiterhin ist vorgesehen, dass in der umlaufenden Nut ein Toleranzring aus Kunststoff angeordnet ist. Der Toleranzring aus Kunststoff kann dabei beispielsweise aus Polytetrafluorethylen bestehen. Er ist in der Regel als Flachring ausgeführt und weist einen durchgehenden Spalt auf. Beim Abschließen der Saugseite des Luftkanals wird die Außenseite des Toleranzringes gegen den Luftkanal gedrückt, so dass sich der Spalt verkleinert bzw. ganz aufgehoben wird. Die dadurch im Toleranzring entstehende Spannung drückt den Toleranzring zusätzlich gegen die Innenwand des Luftkanals, was ein dichtes Abschließen zur Saugseite des Luftkanals verstärkt.

Eine bevorzugte Ausgestaltung der Erfindung besteht darin, dass die Drosselklappe mindestens einen Hülsenabschnitt aufweist, der die Drosselklappenwelle mindestens teilweise umschließt. Dabei ist es in der Regel vorteilhaft, einen oder zwei Hülsenabschnitte entsprechend anzuordnen. Das teilweise Umschließen der Drosselklappenwelle durch mindestens einen Hülsenabschnitt erleichtert in besonders vorteilhafter Weise den Zusammenbau der Teileinheit, da die Drosselklappe auf relativ einfache Weise mit dem mindestens einen Hülsenabschnitt auf die Drosselklappenwelle aufgeschoben und anschließend an dieser befestigt werden kann. Es ist jedoch auch möglich, diese beiden Verfahrensschritte durch einen einstufigen Spritzvorgang miteinander zu kombinieren. Darüber hinaus erhöht die Anordnung des mindestens einen Hülsenabschnittes die Stabilität der Teileinheit eines Drosselklappenstutzens, da die Fixierung der Drosselklappe an der Drosselklappenwelle stabiler erfolgen kann.

Gemäß einer weiteren bevorzugten Ausgestaltung der Erfindung ist vorgesehen, dass zwischen der Drosselklappenwelle und der Drosselklappe mindestens eine Zwischenschicht aus einem metallischen Werkstoff angeordnet ist. Auch hierbei kann die Zwischenschicht in vorteilhafter Weise aus Stahl bestehen. Dabei ist es möglich, dass die Zwischenschicht in Form einer Hülse auf die Drosselklappenwelle aufgeschoben und anschließend die Drosselklappe angespritzt wird. Es ist jedoch auch möglich, die Zwischenschicht zunächst mit der Drosselklappe zu verbinden und diese Kombination anschließend mit der Drosselklappenwelle zu verbinden. Je nach Ausführung der Drosselklappe bzw. deren mindestens einem Hülsenabschnitt kann dies dabei beispielsweise durch Laser- oder Widerstandsschweißen erfolgen. Die Anordnung der Zwischenschicht aus einem metallischen Werkstoff erhöht in besonders vorteilhafter Weise die Stabilität der Teileinheit eines Drosselklappenstutzens, was sich besonders vorteilhaft auf die Lebensdauer der Teileinheit eines Drosselklappenstutzens auswirkt.

Nach einer weiteren Ausgestaltung der Erfindung ist eine einzige Zwischenschicht im mittleren Bereich der Drosselklappe angeordnet. In der Regel reicht eine einzige Zwischenschicht aus, um der Teileinheit des Drosselklappenstutzens eine relativ hohe Stabilität zu verleihen. Um eine homogene Verteilung der Kräfte im Inneren der Teileinheit eines Drosselklappenstutzens zu gewährleisten, ist es dann besonders vorteilhaft, die einzige Zwischenschicht im mittleren Bereich der Drosselklappe anzuordnen.

Gemäß einer weiteren Ausgestaltung der Erfindung weist die Zwischenschicht zur Drosselklappe gerichtet eine aufgeraute Oberfläche auf. Die aufgeraute Oberfläche kann dabei geschaffen werden, indem man entsprechende Rillenmuster anordnet. Dabei ist vorteilhaft, dass die Verbindung der Zwischenschicht mit der Drosselklappe aus Kunststoff verstärkt wird, da der Kunststoff in die aufgeraute Oberfläche eingedrückt werden kann und die Fixierung somit besonders stabil erfolgt.

Eine weitere bevorzugte Ausgestaltung der Erfindung besteht darin, dass die Drosselklappe eine außen umlaufende Nut aufweist. Dies hat den Vorteil, dass Dichtungselemente in die außen umlaufende Nut eingebracht werden können, was das dichte Abschließen der Saugseite des Luftkanals in besonderem Maße vereinfacht und verstärkt.

Die Erfindung wird nachfolgend anhand der Zeichnung (Fig. 1 bis Fig. 7) näher und beispielhaft erläutert.
- Fig. 1: zeigt die Teileinheit eines Drosselklappenstutzens schematisch vereinfacht im Querschnitt.
- Fig. 2: zeigt die Teileinheit eines Drosselklappenstutzens schematisch vereinfacht im Querschnitt mit der Anordnung einer einzigen Zwischenschicht.
- Fig. 3: zeigt eine Drosselklappe aus Kunststoff mit einem einzigen Hülsenabschnitt in dreidimensionaler Form.
- Fig. 4: zeigt die Anordnung der Teileinheit eines Drosselklappenstutzens in einem senkrecht durchgängig verlaufenden Luftkanal im Querschnitt.
- Fig. 5: zeigt die Anordnung der Teileinheit eines Drosselklappenstutzens in einem Luftkanal im Querschnitt, wobei die Gase vom Querschnitt aus gesehen eine seitliche Richtungsänderung erfahren.
- Fig. 6: zeigt die perspektivische Ansicht eines Toleranzringes aus Kunststoff.
- Fig. 7: zeigt die Teileinheit eines Drosselklappenstutzens schematisch vereinfacht im Querschnitt mit einem ersten Hülsenabschnitt und einem zweiten Hülsenabschnitt.

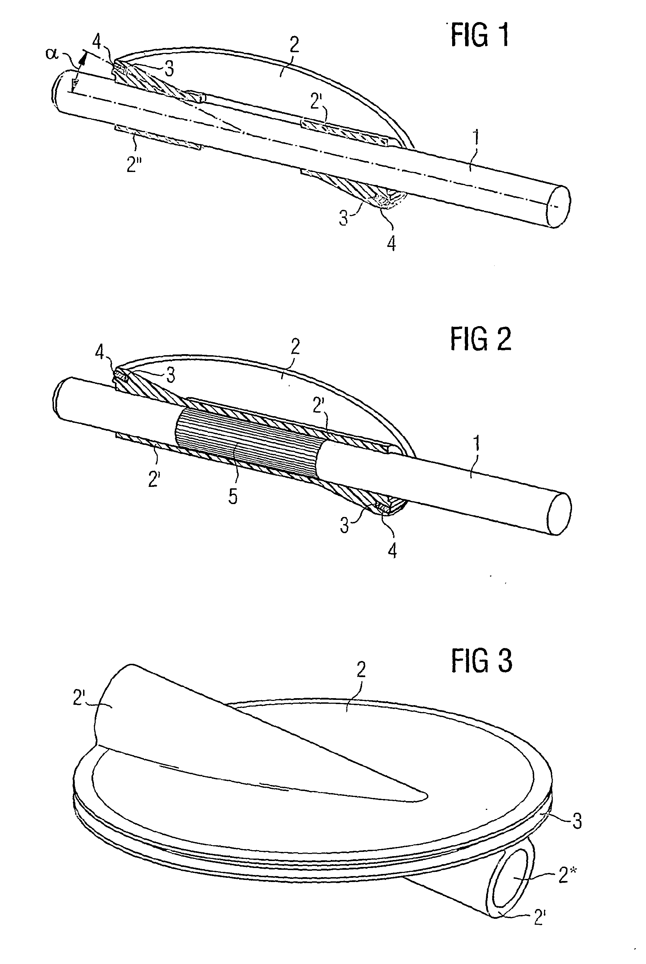

In Fig. 1 ist die Teileinheit eines Drosselklappenstutzens vereinfacht und schematisch im Querschnitt dargestellt. Sie besteht aus einer Drosselklappenwelle 1 aus Metall und einer Drosselklappe 2 aus Kunststoff, wobei die Drosselklappenwelle 1 mittig durch die Drosselklappenwelle 2 hindurchführend angeordnet ist. Der maximale spitze Winkel α zwischen der Längsachse der Drosselklappenwelle 1 und einer weiteren Längsachse der Drosselklappe 2 liegt dabei im Bereich zwischen 5° und 25°. Die Drosselklappe 2 weist einen ersten Hülsenabschnitt 2' und einen zweiten Hülsenabschnitt 2" auf, die die Drosselklappenwelle 1 mindestens teilweise umschließen. Der erste Hülsenabschnitt 2' und der zweite Hülsenabschnitt 2" sind in einem gewissen Abstand zueinander angeordnet. Die Drosselklappe 2 weist ferner eine umlaufende Nut 3 auf, in der ein Toleranzring 4 aus Kunststoff angeordnet ist. Dieser Toleranzring 4 verbessert die abdichtende Wirkung beim Verschließen des Luftkanals (nicht dargestellt) durch die Drosselklappe 2.

In Fig. 2 ist eine Teileinheit eines Drosselklappenstutzens schematisch und vereinfacht im Querschnitt dargestellt, bei der zwischen der Drosselklappenwelle 1 und der Drosselklappe 2 eine einzige Zwischenschicht 5 im mittleren Bereich der Drosselklappe 2 angeordnet ist. Die Zwischenschicht 5 weist dabei eine zur Drosselklappe 2 gerichtete aufgeraute Oberfläche auf. Durch diese aufgeraute Oberfläche wird die Verbindung zwischen der Zwischenschicht 5 und der Drosselklappe 2 verstärkt und somit verbessert. Bei der Montage der Teileinheit eines Drosselklappenstutzens kann man beispielsweise die Zwischenschicht 5 zuerst mit der Drosselklappe 2 umspritzen und anschließend die Einheit aus Zwischenschicht 5 und Drosselklappe 2 auf die Drosselklappenwelle 1 aufschieben. Die Fixierung auf der Drosselklappenwelle 1 kann dabei in einem letzten Schritt durch eine Schraubverbindung erfolgen (nicht dargestellt). Es ist jedoch auch möglich, die Zwischenschicht 5 in Form einer Hülse auf die Drosselklappenwelle 1 aufzuschieben und anschließend in einem weiteren Schritt die Drosselklappe 2 aus Kunststoff durch ein Spritzverfahren anzuordnen. Die Zwischenschicht 5 erhöht die Stabilität der Teileinheit des Drosselklappenstutzens.

In Fig. 3 ist die Drosselklappe 2 dreidimensional dargestellt. Sie weist einen einzigen Hülsenabschnitt 2' auf, der einen inneren, zylinderförmig gestalteten Kanal 2* zur Aufnahme der Drosselklappenwelle (nicht dargestellt) besitzt. Die Drosselklappenwelle wird durch diesen inneren Kanal 2* geschoben und somit auf diesem Wege mittig durch die Drosselklappe 2 hindurchführend angeordnet (nicht dargestellt).

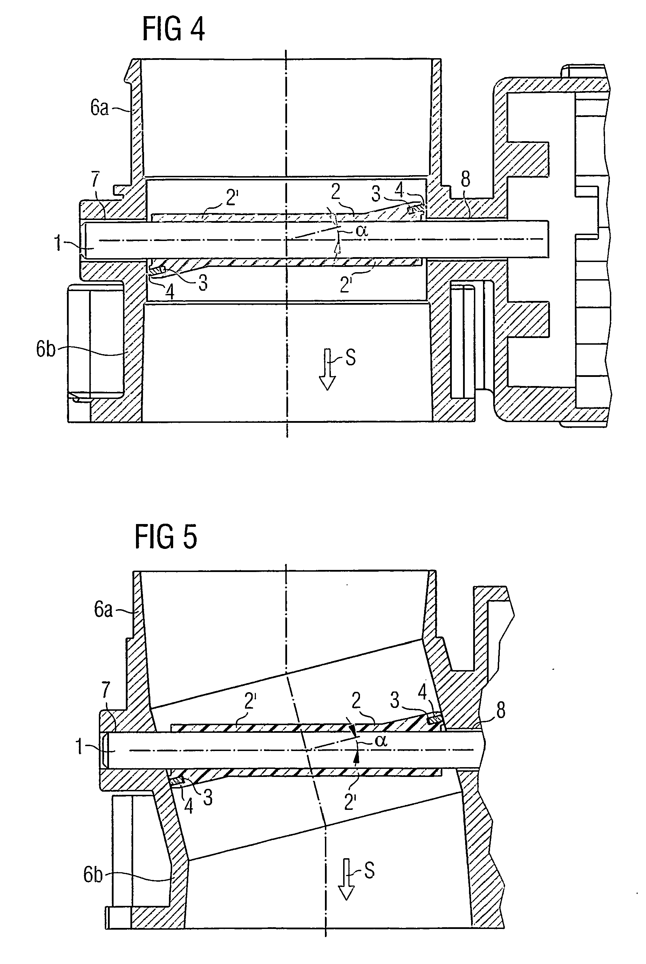

In Fig. 4 ist schematisch und vereinfacht die Anordnung der Teileinheit eines Drosselklappenstutzens in einem Luftkanal mit senkrechter Strömungsführung dargestellt. Die Drosselklappenwelle 1 ist dabei senkrecht zur Strömungsrichtung in Richtung des Pfeils angeordnet und in einem ersten Lager 7 und in einem zweiten Lager 8 drehbar gelagert. Der Luftkanal selber wird durch einen ersten Stutzenabschnitt 6a und einen zweiten Stutzenabschnitt 6b gebildet. Der erste Stutzenabschnitt 6a umschließt diejenige Seite des Luftkanals, in welcher Umgebungsdruck herrscht. Der zweite Stutzenabschnitt 6b umschließt die Saugseite S des Luftkanals, in welcher Unterdruck herrscht. Ein dichtes Abschließen der Saugseite S von derjenigen Seite, in der Umgebungsdruck herrscht, erfolgt hierbei ausschließlich durch die Anordnung des Toleranzringes 4 der im geschlossenen Zustand, der dargestellt ist, an der Innenwandung des Luftkanals fest anliegt. Das erste Lager 7 ist dabei somit derjenigen Seite zuzuordnen, in der Umgebungsdruck herrscht. Das zweite Lager 8 ist in entsprechender Weise der Saugseite S zuzuordnen. Durch die Anordnung der Drosselklappe 2 unter Einhaltung eines maximalen spitzen Winkels α, der im Bereich zwischen 5° und 25° liegt, wird somit vermieden, dass Leckluft aus dem ersten Stutzenabschnitt 6a weder über das erste Lager 7 noch über das zweite Lager 8 in den zweiten Stutzenabschnitt 6b gelangen kann.

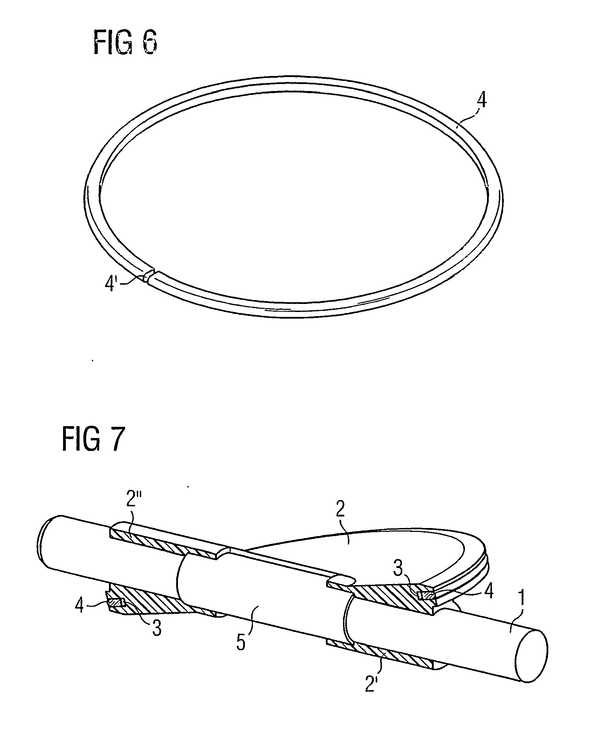

In Fig. 5 ist die Anordnung der Teileinheit eines Drosselklappenstutzens in einem Luftkanal vereinfacht und schematisch dargestellt, wobei die Längsachsen des ersten Stutzenabschnitts 6a und des zweiten Stutzenabschnitts 6b versetzt zueinander angeordnet sind. Auch bei einer solchen alternativen Anordnung wird in vorteilhafter Weise ein Einströmen von Leckluft in den zweiten Stutzenabschnitt 6b vermieden. Es ist jedoch auch allgemein möglich, die Drosselklappenwelle 1 im Winkel zu den Längsachsen des ersten Stutzenabschnitts 6a und des zweiten Stutzenabschnitts 6b versetzt anzuordnen (nicht dargestellt).

In Fig. 6 ist der Toleranzring 5 aus Kunststoff perspektivisch dargestellt. Er weist einen Spalt 4' auf, der zum Auffangen von Toleranzen beim Verschließen des Luftkanals (nicht dargestellt) dient. Der Toleranzring 4 ist als Flachring ausgebildet und besteht beispielsweise aus Polytetrafluorethylen.

In Fig. 7 ist die Teileinheit eines Drosselklappenstutzens vereinfacht und schematisch im Querschnitt dargestellt, bei der zwischen dem ersten Hülsenabschnitt 2' und dem zweiten Hülsenabschnitt 2" eine Zwischenschicht 5 aus einem metallischen Werkstoff angeordnet ist. Die Montage der Teileinheit des Drosselklappenstutzens kann dabei in der Weise vorteilhaft erfolgen, dass man zunächst die Zwischenschicht 5 aus dem metallischen Werkstoff mit der Drosselklappe 2 verbindet. Die so beschaffene Einheit wird anschließend auf die Drosselklappenwelle 1 aufgeschoben. Die Verbindung der Drosselklappe 2 mit der Drosselklappenwelle 1 kann in einem abschließenden Schritt über die Zwischenschicht 5 aus einem metallischen Werkstoff im Freiraum zwischen dem ersten Hülsenabschnitt 2' und dem zweiten Hülsenabschnitt 2" durch Laserschweißen erfolgen.

## Patentansprüche

1. Teileinheit eines Drosselklappenstutzens, die aus einer Drosselklappenwelle (1) aus Metall und einer Drosselklappe (2) aus Kunststoff besteht, bei der die Drosselklappenwelle (1) mittig durch die Drosselklappe (2) hindurchführend angeordnet ist
**dadurch gekennzeichnet, dass** der maximale spitze Neigungswinkel α zwischen der Längsachse der Drosselklappenwelle (1) und der Drosselklappe (2) zwischen 5° und 25° beträgt, die Drosselklappe (2) eine außen umlaufende Nut (3) aufweist, in der ein Toleranzring (4) aus Kunststoff angeordnet ist, und der Toleranzring (4) einen Spalt (4') besitzt, wobei ein dichtes Abschließen der Saugseite S von derjenigen Seite, auf der Umgebungsdruck herrscht, ausschließlich durch die Anordnung des Toleranzrings (4) erfolgt, der im geschlossenen Zustand fest an der Innenwandung des Luftkanals anliegt

2. Teileinheit nach Anspruch 1, bei der die Drosselklappe (2) mindestens einen Hülsenabschnitt (2', 2'') aufweist, der die Drosselklappenwelle (1) mindestens teilweise umschließt.

3. Teileinheit nach Anspruch 1 oder Anspruch 2, bei der zwischen der Drosselklappenwelle (1) und der Drosselklappe (2) mindestens eine Zwischenschicht (5) aus einem metallischen Werkstoff angeordnet ist.

4. Teileinheit nach Anspruch 3, bei der eine einzige Zwischenschicht (5) im mittleren Bereich der Drosselklappe (2) angeordnet ist.

5. Teileinheit nach Anspruch 3 oder Anspruch 4, bei der die Zwischenschicht (5) zur Drosselklappe (2) gerichtet eine aufgeraute Oberfläche aufweist.

## Claims

1. Subunit of a throttle valve housing, which subunit comprises a throttle valve shaft (1) made from metal and a throttle valve (2) made from plastic, in which the throttle valve shaft (1) is arranged so as to be guided centrally through the throttle valve (2), **characterized in that** the maximum acute angle of inclination α between the longitudinal axis of the throttle valve shaft (1) and the throttle valve (2) is between 5° and 25°, the throttle valve (2) has an outwardly circumferential groove (3) in which a tolerance ring (4) made from plastic is arranged, and the tolerance ring (4) has a gap (4') the suction side S being closed sealingly with respect to that side, on which ambient pressure prevails, exclusively by the arrangement of the tolerance ring (4) which bears firmly against the inner wall of the air channel in the closed state.

2. Subunit according to Claim 1, in which the throttle valve (2) has at least one sleeve section (2', 2") which surrounds the throttle valve shaft (1) at least partially.

3. Subunit according to Claim 1 or Claim 2, in which at least one intermediate layer (5) made from a metallic material is arranged between the throttle valve shaft (1) and the throttle valve (2).

4. Subunit according to Claim 3, in which a single intermediate layer (5) is arranged in the central region of the throttle valve (2).

5. Subunit according to Claim 3 or Claim 4, in which the intermediate layer (5) has a roughened surface oriented toward the throttle valve (2).

## Revendications

1. Ensemble partiel d'une tubulure à papillon d'étranglement, qui se compose d'un arbre (1) de papillon d'étranglement, en métal, et d'un papillon d'étranglement (2) en matière plastique, dans lequel l'arbre (1) du papillon d'étranglement est placé, en passant à côté, au milieu du papillon d'étranglement (2), **caractérisé par le fait que** l'angle aigu maximum d'inclinaison α entre l'axe longitudinal de l'arbre (1) du papillon d'étranglement et le papillon d'étranglement (2) se situe entre 5° et 25°, que le papillon d'étranglement (2) comporte une rainure (3) extérieurement périphérique, dans laquelle est placée une bague de tolérance (4) en matière plastique, et que la bague de tolérance (4) a une fente (4'), une obturation étanche du côté aspiration S par rapport au côté où règne la pression ambiante se faisant uniquement par la mise en place de la bague de tolérance (4), qui est appliquée, dans l'état fermé, fermement sur la paroi intérieure du canal d'air.

2. Ensemble partiel selon la revendication 1, dans lequel le papillon d'étranglement (2) comporte au moins un tronçon de douille (2', 2"), qui entoure, au moins partiellement, l'arbre (1) du papillon d'étranglement.

3. Ensemble partiel selon la revendication 1 ou la revendication 2, dans lequel est disposée, entre l'arbre (1) du papillon d'étranglement et le papillon d'étranglement (2), au moins une couche intermédiaire (5) en matière première métallique.

4. Ensemble partiel selon la revendication 3, dans lequel est disposée, dans la partie centrale du papillon d'étranglement (2), une seule couche intermédiaire (5).

5. Ensemble partiel selon la revendication 3 ou la revendication 4, dans lequel la couche intermédiaire (5) comporte une surface extérieure rugueuse tournée vers le papillon d'étranglement (2).
